# FASCICULE DE BREVET EUROPEEN

(11) **EP 1 853 441 B1**
(45) Date de publication et mention de la délivrance du brevet: **14.11.2012**
(21) Numéro de dépôt: 06708590.2
(22) Date de dépôt: 01.03.2006
(51) Int. Cl.: B60G 7/02, B60G 9/00, B60G 7/00, B60G 21/05

(54) **ESSIEU DANS LEQUEL LES BRAS LONGITUDINAUX SONT ACCOUPLES AU CHASSIS PAR L'INTERMEDIAIRE DE DOUILLES AGRAFEES, PROCEDE D'ASSEMBLAGE ET VEHICULE CORRESPONDANTS**
ACHSE, DEREN LÄNGSARME ÜBER EINE KLAMMERHÜLSE AN DAS FAHRGESTELL GEKOPPELT SIND, ENTSPRECHENDES MONTAGEVERFAHREN UND FAHRZEUG
AXLE WHEREIN THE LONGITUDINAL ARMS ARE COUPLED TO THE CHASSIS VIA STAPLED BUSHING, CORRESPONDING ASSEMBLY METHOD AND VEHICLE

(30) Priorité: 02.03.2005 FR 0502129
(43) Date de publication de la demande: 14.11.2007
(73) Titulaire: Auto Chassis International SNC, 72086 Le Mans Cédex 9 (FR); TOYOTA JIDOSHA KABUSHIKI KAISHA, Toyota-shi, Aichi-ken, 471-8571 (JP); Peugeot Citroën Automobiles, 78140 Vélizy-Villacoublay (FR)
(72) Inventeur: FERET, Olivier, F-72400 Cherreau (FR)
(74) Mandataire: Larcher, Dominique
(86) Numéro de dépôt international: PCT/EP2006/060373
(87) Numéro de publication internationale: WO 2006/092420

(56) Documents cités:
- EP-A- 0 600 198
- EP-A- 0 739 763
- FR-A- 2 765 503
- US-A- 5 988 672
- US-B1- 6 250 657

## Description

Le domaine de l'invention est celui des véhicules automobiles. Plus précisément, l'invention concerne les essieux et en particulier, mais non exclusivement, les essieux souples pour les véhicules automobiles. Un tel essieu, selon le préambule de la revendication 1 est connu du document US 6 250 657 B.

On rappelle qu'on désigne généralement par essieu souple un essieu conçu de façon à former un élément torsible entre deux roues.

Classiquement, un essieu comprend deux bras longitudinaux portant chacun un support de montage de roue et reliés par un élément de liaison transversale appelé traverse ou profil.

Les bras longitudinaux sont généralement associés à différents organes fonctionnels tels que notamment :
- des moyens supportant une extrémité des ressorts de suspension, ces moyens supports étant désignés par le terme de coupelle de ressort ;
- des moyens de coopération avec des amortisseurs ;
- les douilles d'accouplement de l'essieu au châssis du véhicule, permettant le montage à pivotement des bras longitudinaux par rapport au châssis.

Une douille d'accouplement est une pièce cylindrique creuse rapportée en bout de chacun des bras longitudinaux.

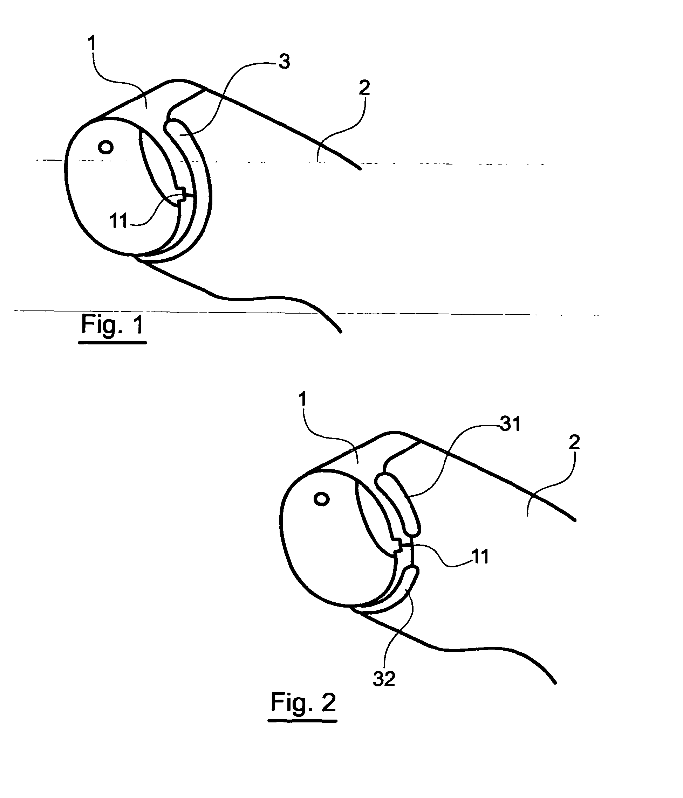

Comme illustré par la figure 1, ces douilles d'accouplement 1 sont soudées sur les bras longitudinaux 2 à l'aide d'un cordon 3 s'étendant de façon périphérique à la surface de la douille ceci de part et d'autre du bras d'essieu.

Ces douilles d'accouplement peuvent être fabriquées selon différentes techniques, et notamment :
- par extrusion d'un matériau métallique, le tube obtenu étant ensuite découpé en tronçons de longueur correspondante à celle des douilles ;
- par mise en forme d'un feuillard métallique, celui-ci étant roulé puis soudé le long des bords jointifs de façon à former un tube, ce dernier étant ensuite découpé en tronçons de longueur correspondante à celle des douilles ;
- par découpe (généralement à l'aide d'une opération de poinçonnage) de pièces (aux dimensions des douilles) dans un feuillard métallique, ces pièces étant ensuite roulées sur elles-mêmes, leurs deux bords rassemblés étant solidarisés l'un à l'autre constituant ainsi les douilles ; généralement, les deux bords rassemblés de la douille sont agrafés.

L'invention concerne plus précisément la fixation des douilles obtenues par cette dernière technique à des bras longitudinaux d'essieu.

De telles douilles sont désignées par le terme de douille « clipsée » ou « agrafée ».

On note que ces termes indiquent chacun une solution d'assemblage précise. Toutefois, l'invention s'applique plus généralement à la fixation sur un bras d'essieu d'une douille obtenue en roulant tout ou partie d'un feuillard métallique, maintenu roulé, sous forme d'un tube ou d'un tronçon de tube, en faisant coopérer les bords jointifs du feuillard sans apport de matière ou de pièce supplémentaire.

Ainsi, l'agrafage est le plus souvent obtenu en réalisant des replis dans les bords jointifs, en engageant ces replis les uns dans les autres puis en les pressant plus ou moins pour les maintenir engagés.

Les douilles agrafées présentent l'avantage d'être faciles et peu onéreuses à fabriquer. Elles contribuent donc à limiter le coût global de l'essieu qui les incorpore.

En revanche, on constate que la soudure de ces douilles sur les bras d'essieu présente une moins bonne tenue qu'avec les douilles traditionnelles telles que celles obtenues à partir d'un tube extrudé.

En effet, sur le cordon de soudure sollicité (c'est-à-dire celui situé côté extérieur du véhicule), il est parfois constaté qu'une fissure du cordon s'amorce dans l'agrafe (ou le clip) de la douille. Cette fissure, au fur et à mesure des sollicitations en fatigue longitudinale de la douille peut se propager jusqu'à sectionner le cordon de soudure liant la douille au bras d'essieu.

Bien entendu, un -tel cas de figure est inacceptable, les conséquences d'une dégradation telle que celle qui vient d'être décrite pouvant être plus ou moins importantes, voire dramatiques (notamment pour la sécurité des utilisateurs du véhicule concerné).

Par ailleurs, pour obtenir un gain de poids, on peut réduire l'épaisseur de la douille. Dans un tel cas, il est possible, lors du soudage dans la-zone d'agrafage de la douille d'effondrer la matière de la douille, ceci pour une énergie de soudage déterminée. Dans ce cas, l'énergie de soudage perce la douille et peut engendrer la formation d'une bavure à l'intérieur de la douille au point de rendre difficile, voire impossible, l'introduction d'une articulation dans la douille.

L'invention a donc pour objectif de pallier ces inconvénients de l'art antérieur.

Plus précisément, l'invention a pour objectif de proposer un essieu comprenant deux bras longitudinaux portant chacun une douille d'accouplement au châssis du véhicule, dans lequel la soudure entre les douilles et les bras longitudinaux présente une meilleure tenue dans le temps que les soudures classiques de l'art antérieur.

L'invention a également pour objectif de proposer une technique permettant d'obtenir simplement, rapidement et efficacement un tel essieu.

L'invention a aussi pour objectif de fournir une telle technique qui soit adaptée à différents types de douilles agrafées.

Un autre objectif de l'invention est de fournir une telle technique qui puisse être mise en oeuvre aisément et à moindre coût.

Ces objectifs, ainsi que d'autres qui apparaîtront par la suite, sont atteints grâce à l'invention qui a pour objet un essieu de véhicule automobile du type comprenant deux bras longitudinaux chacun destiné à être fixé au châssis dudit véhicule par l'intermédiaire d'une douille agrafée formée dans une pièce roulée sur elle-même dont deux bords ont été agrafés l'un à l'autre, ladite douille étant soudée audit bras selon au moins une ligne périphérique à la surface de ladite douille, caractérisé en ce que ladite douille est soudée audit bras par l'intermédiaire d'au moins deux cordons de soudure disposés de façon périphérique à la surface de ladite douille, et sensiblement dans le prolongement l'un de l'autre en ménageant entre eux un espace traversé par lesdits bords agrafés de ladite douille.

On obtient de cette façon une technique de soudure d'une douille agrafée à un bras longitudinal d'essieu qui présente une meilleure tenue dans le temps que la technique de soudure de l'art antérieur.

On note que la technique selon l'invention s'inscrit dans une approche allant tout à fait à l'encontre des pratiques courantes dans le domaine de l'invention.

En effet, avec les techniques classiques, la fissure, puis la cassure, du cordon est due à une souplesse relative de la douille due à la présence de l'agrafe. Cette souplesse se traduit par des micro-déplacements au niveau de l'agrafe de la douille qui engendrent une fatigue longitudinale ayant pour effet de solliciter le cordon de soudure jusquà le fissurer.

Selon un mode de résolution classique et quasi constant de ce type de problème, on augmente la rigidité de l'ensemble, ceci pour atténuer les effets de la souplesse relative de la douille. En particulier, on épaissit la tôle formant la douille en vue d'améliorer la tenue de la liaison entre la douille et le bras d'essieu correspondant.

L'invention s'inscrit donc dans une approche fondamentalement opposée puisque la technique proposée consiste à augmenter la souplesse relative de la liaison entre la douille et le bras longitudinal. Ceci est obtenu en évitant que les bords agrafés de la douille et le cordon de soudure se rencontrent. Ainsi, la fatigue longitudinale au niveau de l'agrafe se dissipe sans être transmise au niveau des cordons de soudure.

Il en résulte que la tenue de chacun des cordons de soudure disposés de part et d'autre du bras d'essieu selon l'invention, est améliorée par rapport au cordon classique de l'art antérieur.

En outre, on supprime ou à tout le moins on limite les risques d'effondrement de la matière de la douille dans la zone d'agrafage qui peuvent conduire à un perçage inopportun de la douille tel que mentionné précédemment.

En conséquence, c'est l'ensemble de la liaison entre la douille et le bras qui est améliorée.

Selon une première variante de l'invention, lesdits bords agrafés sont sensiblement rectilignes et s'étendent parallèlement à l'axe longitudinal de ladite douille.

Selon une deuxième variante de l'invention, lesdits bords agrafés s'emboîtent au moins partiellement l'un dans l'autre, sur une région périphérique de ladite douille.

On comprend donc que différents modèles de douilles agrafées peuvent être utilisés dans le cadre de l'invention. La technique proposée selon l'invention est donc utilisable dans de nombreux cas de figure, comme cela va apparaître clairement par la suite.

Préférentiellement, lesdits cordons sont réalisés de part et d'autre dudit bras longitudinal.

Il reste en effet souhaitable de prévoir ces cordons de soudure de part et d'autre du bras pour respecter le haut niveau des caractéristiques mécaniques généralement demandé par les constructeurs de véhicules automobiles.

Selon un premier mode de réalisation, une paire desdits cordons de soudure est réalisée de chaque côté dudit bras longitudinal, l'espace entre lesdits cordons d'une paire étant essentiellement réduit au passage nécessaire auxdits bords agrafés au voisinage des extrémités de ladite douille.

Selon un deuxième mode de réalisation, ledit espace ménagé entre lesdits cordons d'une paire comprend au moins ladite région périphérique dans laquelle s'inscrit l'emboîtement desdits bords agrafés.

Selon un troisième mode de réalisation, la zone dans laquelle les bords agrafés s'emboîtent est prévue de façon à être bordée, selon l'axe longitudinal de la douille, par lesdites paires de cordons, l'espace entre lesdits cordons d'une paire étant essentiellement réduit au-passage-nécessaire auxdits bords agrafés.

Ainsi, la technique peut être déclinée de différentes manières en vue d'être adaptée à tout modèle de douilles agrafées, ceci quelles que soient les modifications ou évolutions apportées aux douilles par les fabricants de celles-ci.

Selon une solution avantageuse, ledit essieu est du type des essieux souples.

On note toutefois qu'une telle technique peut être appliquée à d'autres essieux que les essieux souples.

L'invention concerne également un procédé de fabrication d'un essieu comprenant deux bras longitudinaux chacun destiné à être fixé au châssis dudit véhicule par l'intermédiaire d'une douille agrafée formée dans une pièce roulée sur elle-même dont deux bords ont été agrafés l'un à l'autre, ladite douille étant soudée audit bras selon au moins une ligne périphérique à la surface de ladite douille, caractérisé en ce qu'il comprend au moins une étape de dépose de deux cordons de soudure déposés de façon périphérique à la surface de ladite douille, et sensiblement dans le prolongement l'un de l'autre en ménageant entre eux un espace traversé par lesdits bords agrafés de ladite douille.

L'invention concerne aussi un véhicule équipé d'au moins un essieu de véhicule automobile du type comprenant deux bras longitudinaux chacun destiné à être fixé au châssis dudit véhicule par l'intermédiaire d'une douille agrafée formée dans une pièce roulée sur elle-même dont deux bords ont été agrafés l'un à l'autre, ladite douille étant soudée audit bras selon au moins une ligne périphérique à la surface de ladite douille, caractérisé en ce que ladite douille est soudée audit bras par l'intermédiaire d'au moins deux cordons de soudure déposés de façon périphérique à la surface de ladite douille, et sensiblement dans le prolongement l'un de l'autre et ménageant entre eux un espace traversé par lesdits bords agrafés de ladite douille.

D'autres caractéristiques et avantages de l'invention apparaîtront plus clairement à la lecture de la description suivante de trois modes de réalisation préférentiels de l'invention, donnés à titre d'exemples illustratifs et non limitatifs, et des dessins-annexés parmi lesquels :
- la figure 1 est une vue en perspective d'une douille soudée sur un bras d'essieu, selon l'art antérieur ;
- la figure 2 est une vue en perspective d'une douille soudée sur un bras d'essieu, selon l'invention ;
- les figures 3 à 5 illustrent chacune un mode de réalisation de l'invention.

Tel que déjà mentionné précédemment, l'invention s'applique avantageusement aux essieux souples. On rappelle qu'on désigne généralement par essieu souple un essieu conçu de façon à former un élément torsible entre deux roues.

Classiquement, un essieu souple comprend deux bras longitudinaux portant chacun un support de montage de roue et reliés par un élément de liaison transversale appelé traverse ou profil.

Les bras longitudinaux portent les douilles d'accouplement de l'essieu au châssis du véhicule, permettant le montage à pivotement des bras longitudinaux par rapport au châssis.

On note que l'invention pourrait également s'appliquer aux douilles portées par les bras inférieur avant.

La figure 1 illustre la technique antérieure, selon laquelle une douille 1 est montée sur un bras longitudinal 2 d'essieu, et est solidarisée à ce dernier à l'aide d'un cordon de soudure 3 déposé de façon périphérique à la surface de la douille et à la jonction avec le bras 2.

Un tel cordon 3 est déposé de chaque côté du bras 2.

Tel que cela apparaît clairement, la douille 1 est positionnée par rapport au bras longitudinal 2 de telle sorte que les bords agrafés 11 sont placés dans le creux prévu à l'extrémité du bras longitudinal 2.

On note que ce creux est formé de telle sorte qu'il épouse la forme externe de la douille 1.

On note également que la douille 1 est placée dans ce creux de façon que les bords agrafés 11 de la douille soient approximativement à mi-hauteur du creux.

Dans le cas de l'invention illustrée par la figure 2, la douille 1, le bras 2 et leur positionnement relatif sont inchangés.

En revanche, selon le présent mode de réalisation de l'invention illustré par la figure 2, la douille 1 est soudée au bras longitudinal 2 par deux cordons 31, 32 (et non plus un seul) disposés de façon périphérique à la surface de la douille 1, sensiblement dans le prolongement l'un de l'autre et ménageant entre eux un espace traversé par les bords agrafés 11 de la douille.

La dépose de ces deux cordons 31, 32 est effectuée de façon automatisée, la position des bords agrafés 11 étant indexée ou détectée par tout moyen approprié.

De plus, l'opération de dépose des cordons 31, 32 est réalisée de part et d'autre du bras longitudinal 2.

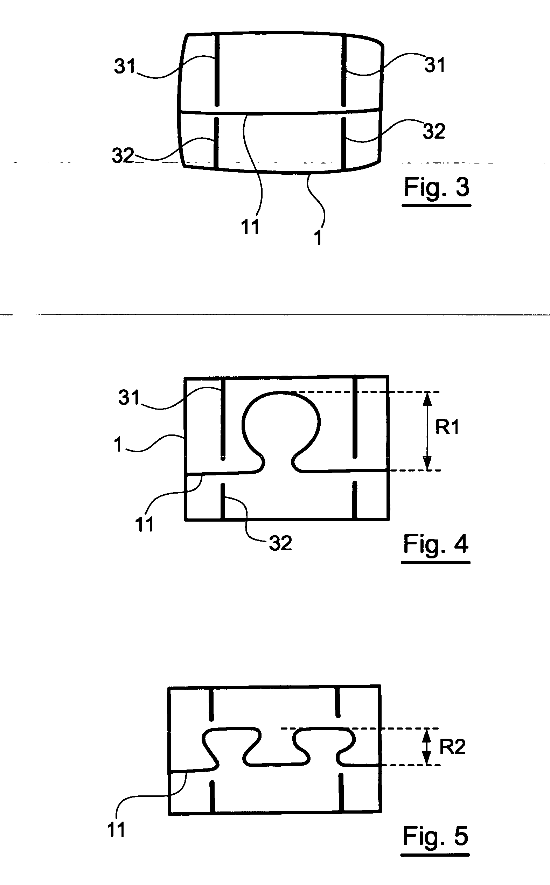

Les figures 3 à 5 illustrent chacune un mode de réalisation de l'invention, variant de l'un à l'autre essentiellement en fonction du modèle de douille.

Sur la figure 3, les bords agrafés 11 sont sensiblement rectilignes et parallèles à l'axe longitudinal de la douille.

Dans ce cas, les cordons 31, 32 sont déposés sur la douille, en bordure du bras longitudinal, de façon à ménager un espace essentiellement réduit au passage nécessaire aux bords agrafés 11.

Tel qu'illustré par la figure 4, la douille 1 présente des bords agrafés 11 qui s'emboîtent l'un dans l'autre, cet emboîtement s'étendant sur une région périphérique R1 et sur une plage, selon l'axe longitudinal de la douille, de dimension inférieure à la largeur du bras longitudinal.

Ainsi, de façon similaire au cas de la figure 3, l'espace entre les cordons 31, 32 d'une paire se réduit au passage nécessaire aux bords agrafés 11. En effet, pour un même écartement entre les paires de cordons (qui correspond à la largeur du bras longitudinal) que dans le cas de la figure 3, l'espace entre les cordons d'une paire de la figure 4 coïncide avec la portion rectiligne des bords agrafés 11.

Le cas de la figure 5 diffère quelque peu comme cela va apparaître clairement ci-après.

Dans ce cas, le bras longitudinal 2 est considéré être le même que dans les cas précédents. En d'autres termes, l'écartement entre les paires de cordons de soudure est le même que sur les figures 3 et 4.

Tel qu'illustré, les bords agrafés 11 s'emboîtent l'un dans l'autre en s'étendant sur une région périphérique R2 de la douille et sur une longueur, selon l'axe longitudinal de la douille, supérieur à l'écartement entre les paires de cordons.

Aussi, pour éviter que les cordons de soudure et les bords agrafés s'entrecroisent, l'espace entre les deux cordons 31, 32 d'une même paire est augmenté pour présenter un espacement incluant au moins la région R2.

## Revendications

1. Essieu de véhicule automobile du type comprenant deux bras longitudinaux (2) chacun- destiné à être fixé au châssis dudit véhicule par l'intermédiaire d'une douille (1) agrafée formée dans une pièce roulée sur elle-même dont deux bords (11) ont été agrafées l'un à l'autre, ladite douille étant soudée audit bras selon au moins une ligne périphérique à la surface de ladite douille,
**caractérisé en ce que** ladite douille (1) est soudée audit bras (2) par l'intermédiaire d'au moins deux cordons de soudure (31), (32) disposés de façon périphérique à la surface de ladite douille (1), et sensiblement dans le prolongement l'un de l'autre en ménageant entre eux un espace traversé par lesdits bords (11) agrafés de ladite douille (1).

2. Essieu selon la revendication 1, **caractérisé en ce que** lesdits bords agrafés (11) sont sensiblement rectilignes et s'étendent parallèlement à l'axe longitudinal de ladite douille (1).

3. Essieu selon la revendication 1, **caractérisé en ce que** lesdits bords agrafés (11) s'emboîtent au moins partiellement l'un dans l'autre, sur une région périphérique de ladite douille.

4. Essieu selon l'une quelconque des revendications 1 à 3, **caractérisé en ce que** lesdits cordons (31), (32) sont réalisés de part et d'autre dudit bras longitudinal (2).

5. Essieu selon l'une quelconque des revendications 1 à 4, **caractérisé en ce qu'**une paire desdits cordons (31), (32) de soudure est réalisée de chaque côté dudit bras longitudinal (2), l'espace entre lesdits cordons (31), (32) d'une paire étant essentiellement réduit au passage nécessaire auxdits bords agrafés (11).

6. Essieu selon les revendications 3 et 4, **caractérisé en ce que** ledit espace ménagé entre lesdits cordons (31), (32) d'une paire comprend au moins ladite région périphérique dans laquelle s'inscrit l'emboîtement desdits bords agrafés (11).

7. Essieu selon les revendications 3 et 4, **caractérisé en ce que** la zone dans laquelle les bords agrafés (11) s'emboîtent est prévue de façon à être bordée, selon l'axe longitudinal de la douille (1), par lesdites paires de cordons (31), (32), l'espace entre lesdits cordons d'une paire étant essentiellement réduit au passage nécessaire auxdits bords agrafés (11) au voisinage des extrémités de ladite douille (1).

8. Essieu selon l'une quelconque des revendications 1 à 7, **caractérisé en ce que** ledit essieu (1) est du type des essieux souples.

9. Procédé de fabrication d'un essieu comprenant deux bras longitudinaux (2) chacun destiné à être fixé au châssis dudit véhicule par l'intermédiaire d'une douille (1) soudée audit bras selon au moins une ligne périphérique à la surface de ladite douille (1), ladite douille (1) étant du type agrafée, **caractérisé en ce qu'**il comprend au moins une étape de dépose de deux cordons (31), (32) de soudure déposés de façon périphérique à la surface de ladite douille (1), et sensiblement dans le prolongement l'un de l'autre en ménageant entre eux un espace traversé par lesdits bords agrafés (11) de ladite douille (1).

10. Véhicule équipé d'au moins un essieu de véhicule automobile du type comprenant deux bras longitudinaux (2) chacun destiné à être fixé au châssis dudit véhicule par l'intermédiaire d'une douille (1) soudée audit bras selon au moins une ligne périphérique à la surface de ladite douille (1), ladite douille (1) étant du type agrafée,
**caractérisé en ce que** ladite douille (1) est soudée audit bras (2) par l'intermédiaire d'au moins deux cordons (31), (32) de soudure déposés de façon périphérique à la surface de ladite douille (1), et sensiblement dans le prolongement l'un de l'autre et ménageant entre eux un espace traversé par lesdits bords agrafés de ladite douille (1).

## Claims

1. Axle for a motor vehicle, of the type comprising two longitudinal arms (2) which are each intended to be fixed to the chassis of the said vehicle via a stapled bushing (1) formed in a part which has been wound round on itself and of which two edges (11) have been stapled to one another, the said bushing being welded to the said arm along at least one peripheral line on the surface of the said bushing,
**characterised in that** the said bushing (1) is welded to the said arm (2) via at least two weld beads (31), (32) disposed in a peripheral manner on the surface of the said bushing (1) and substantially in the prolongation of one another, while providing, between them, a space through which the said stapled edges (11) of the said bushing (1) pass.

2. Axle according to claim 1, **characterised in that** the said stapled edges (11) are substantially rectilinear and extend parallel to the longitudinal axis of the said bushing (1).

3. Axle according to claim 1, **characterised in that** the said stapled edges (11) fit into one another, at least partially, over a peripheral region of the said bushing.

4. Axle according to any of claims 1 to 3, **characterised in that** the said beads (31), (32) are produced on either side of the said longitudinal arm (2).

5. Axle according to any of claims 1 to 4, **characterised in that** a pair of the said weld beads (31), (32) is produced on each side of the said longitudinal arm (2), the space between the said beads (31), (32) belonging to a pair being essentially reduced to the passage required for the said stapled edges (11).

6. Axle according to claims 3 and 4, **characterised in that** the said space provided between the said beads (31), (32) belonging to a pair comprises at least the said peripheral region within which the fitting-together of the said stapled edges (11) occurs.

7. Axle according to claims 3 and 4, **characterised in that** the zone within which the stapled edges (11) fit together is provided so as to be bordered, along the longitudinal axis of the bushing (1), by the said pairs of beads (31), (32), the space between the said beads belonging to a pair being essentially reduced to the passage required for the said stapled edges (11) in the vicinity of the ends of the said bushing (1).

8. Axle according to any of claims 1 to 7, **characterised in that** the said axle (1) is of the type comprising flexible axles.

9. Method of manufacturing an axle comprising two longitudinal arms (2) which are each intended to be fixed to the chassis of the said vehicle via a bushing (1) welded to the said arm along at least one peripheral line on the surface of the said bushing (1), the said bushing (1) being of the stapled type, **characterised in that** said method comprises at least one stage involving the deposition of two weld beads (31), (32) which are deposited in a peripheral manner on the surface of the said bushing (1) and substantially in the prolongation of one another, while providing, between them, a space through which the said stapled edges (11) of the said bushing (1) pass.

10. Vehicle equipped with at least one motor vehicle axle of the type comprising two longitudinal arms (2) which are each intended to be fixed to the chassis of the said vehicle via a bushing (1) welded to the said arm along at least one peripheral line on the surface of the said bushing (1), the said bushing (1) being of the stapled type,
**characterised in that** the said bushing (1) is welded to the said arm (2) via at least two weld beads (31), (32) which are deposited in a peripheral manner on the surface of the said bushing (1), and substantially in the prolongation of one another, and which provide, between them, a space through which the said stapled edges (11) of the said bushing (1) pass.

## Patentansprüche

1. Kraftfahrzeugachse des Typs, der zwei Längsarme (2) aufweist, die jeweils dazu bestimmt sind, an dem Chassis des Fahrzeugs mittels einer gefalzten Hülse (1) befestigt zu werden, die aus einem auf sich selbst aufgerollten Teil gebildet ist, dessen zwei Ränder (11) aneinander gefalzt wurden, wobei die Hülse entlang mindestens einer peripheren Linie auf der Oberfläche der Hülse an den Arm angeschweißt ist,
**dadurch gekennzeichnet, dass** die Hülse (1) mittels mindestens zweier peripher an der Oberfläche der Hülse (2) und im Wesentlichen in Verlängerung zueinander angeordneter Schweißnähte (31), (32) an den Arm (2) geschweißt ist, wobei zwischen ihnen ein Raum eingerichtet ist, der von den gefalzten Rändern (11) der Hülse (1) durchquert wird.

2. Achse nach Anspruch 1, **dadurch gekennzeichnet, dass** die gefalzten Ränder (11) im Wesentlichen geradlinig sind und sich parallel zu der Längsachse der Hülse (1) erstrecken.

3. Achse nach Anspruch 1, **dadurch gekennzeichnet, dass** die gefalzten Ränder (11) mindestens teilweise in einem peripheren Bereich der Hülse ineinander eingreifen.

4. Achse nach einem der Ansprüche 1 bis 3, **dadurch gekennzeichnet, dass** die Nähte (31), (32) auf beiden Seiten des Längsarms (2) realisiert sind.

5. Achse nach einem der Ansprüche 1 bis 4, **dadurch gekennzeichnet, dass** ein Paar der Schweißnähte (31), (32) auf jeder Seite des Längsarms (2) realisiert ist, wobei der Raum zwischen den Nähten (31), (32) eines Paars im Wesentlichen auf die für die gefalzten Ränder (11) erforderliche Passage reduziert ist.

6. Achse nach den Ansprüchen 3 und 4, **dadurch gekennzeichnet, dass** der Raum, der zwischen den Nähten (31), (32) eines Paars mindestens den peripheren Bereich umfasst, in welchen das Eingreifen der gefalzten Ränder (11) fällt.

7. Achse nach den Ansprüchen 3 und 4, **dadurch gekennzeichnet, dass** der Bereich, in dem die gefalzten Ränder (11) ineinander eingreifen, derart vorgesehen ist, dass er entlang der Längsachse der Hülse (1) von den Paaren der Nähte (31), (32) umrandet ist, wobei der Raum zwischen den Nähten eines Paars im Wesentlichen auf die für die gefalzten Ränder (11) erforderliche Passage in der Nähe der Enden der Hülse (1) reduziert ist.

8. Achse nach einem der Ansprüche 1 bis 7, **dadurch gekennzeichnet, dass** die Achse (1) des Typs elastischer Achsen ist.

9. Verfahren zum Herstellen einer Achse, die zwei Längsarme (2) aufweist, die jeweils dazu bestimmt sind, an dem Chassis des Fahrzeugs mittels einer Hülse (1) befestigt zu werden, die entlang mindestens einer peripheren Linie an der Oberfläche der Hülse (1) an den Arm geschweißt ist, wobei die Hülse (1) des gefalzten Typs ist, **dadurch gekennzeichnet, dass** es mindestens einen Schritt des Aufbringens von zwei Schweißnähten (31), (32) aufweist, die peripher an der Oberfläche der Hülse (1) und im Wesentlichen in Verlängerung zueinander aufgebracht werden, wobei zwischen ihnen ein Raum eingerichtet ist, der von den gefalzten Rändern (11) der Hülse (1) durchquert wird.

10. Fahrzeug, das mit mindestens einer Kraftfahrzeugachse des Typs ausgerüstet ist, der zwei Längsarme (2) aufweist, die jeweils dazu bestimmt sind, an dem Chassis des Fahrzeugs mittels einer Hülse (1) befestigt zu werden, die entlang mindestens einer umfänglichen Linie an der Oberfläche der Hülse (1) an den Arm geschweißt ist, wobei die Hülse (1) des gefalzten Typs ist,
**dadurch gekennzeichnet, dass** die Hülse (1) mittels mindestens zweier peripher an der Oberfläche der Hülse (1) und im Wesentlichen in Verlängerung zueinander angeordneter Schweißnähte (31), (32) und einen Raum zwischen ihnen einrichtend an den Arm (2) geschweißt ist, der von den gefalzten Rändern der Hülse (1) durchquert wird.
